(19) Europäisches Patentamt / European Patent Office / Office européen des brevets

(11) **EP 2 153 047 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(21) Anmeldenummer: 08718079.0

(22) Anmeldetag: **20.03.2008**

(51) Int Cl.:
*F02D 41/00* (2006.01)          *F02D 41/14* (2006.01)
*F02D 41/08* (2006.01)

(86) Internationale Anmeldenummer:
**PCT/EP2008/053361**

(87) Internationale Veröffentlichungsnummer:
**WO 2008/135311 (13.11.2008 Gazette 2008/46)**

(54) **VERFAHREN ZUM BETRIEB EINER BRENNKRAFTMASCHINE**

METHOD FOR OPERATING AN INTERNAL COMBUSTION ENGINE

PROCÉDÉ D'EXPLOITATION D'UN MOTEUR À COMBUSTION INTERNE

(84) Benannte Vertragsstaaten:
**DE SE**

(30) Priorität: **04.05.2007 DE 102007020960**

(43) Veröffentlichungstag der Anmeldung:
**17.02.2010 Patentblatt 2010/07**

(73) Patentinhaber: **Robert Bosch GmbH**
**70442 Stuttgart (DE)**

(72) Erfinder:
• **STREIB, Martin**
**71665 Vaihingen (DE)**
• **MALLEBREIN, Georg**
**70825 Korntal-Muenchingen (DE)**

• **BUGANZA, Federico**
**I-41015 Nonantola (IT)**
• **JAKOBS, Kai**
**71701 Schwieberdingen (DE)**
• **PFEIFFER, Juergen**
**75181 Pforzheim (DE)**
• **HINCKER-PIOCELLE, Emilie**
**71634 Ludwigsburg (DE)**
• **CREPIN, Pierre-Yves**
**70469 Stuttgart (DE)**

(56) Entgegenhaltungen:
EP-A- 1 304 466      WO-A-2008/000550
DE-A1- 4 117 440      US-A- 5 850 824
US-A- 5 901 671

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung betrifft ein Verfahren zum Betrieb einer Brennkraftmaschine, welche mit Kraftstoffen und Kraftstoffgemischen aus diesen Kraftstoffen betrieben werden kann, die sich in ihrem Luftbedarf für eine stöchiometrische Verbrennung unterscheiden, wobei eine der Brennkraftmaschine zuzuführende Kraftstoffmenge über eine Gemischadaption und eine Kraftstoffadaption korrigiert wird, wobei die Gemischadaption und die Kraftstoffadaption auf Basis einer Lambda-Regelung erfolgt und wobei eine vor einem Tankvorgang in einem den Kraftstoffvorrat der Brennkraftmaschine beinhaltenden Tank befindliche Kraftstoffmenge und eine dem Tank zugeführte Kraftstoffmenge bestimmt wird.

Aus der DE 30 36 107 C3 ist eine Regeleinrichtung bekannt für ein Kraftstoffzumesssystem bei einer Brennkraftmaschine bestehend aus einer Kraftstoffversorgungseinrichtung (Kraftstoffeinspritzventil), einer Lambdasonde, Mitteln (Zeitglied) zum Bilden eines Grundzumesssignals, das betriebskenngrößenabhängig korrigiert letztlich das Ansteuersignal (ti) der Kraftstoffversorgungsvorrichtung bestimmt, einem Lambda-Regler, der ausgehend von einem von der Lambda-Sonde gemessenen Signal ($\lambda$) einen Korrekturfaktor ermittelt, der multiplikativ das Grundzumesssignal (tp) mit dem Korrekturfaktor beeinflusst. Dabei ist vorgesehen, dass die Lambda-Korrektur außer vom Korrekturfaktor (KR $\lambda$) abhängig ist von einer additiven (KA $\lambda$) und/oder einer multiplikativen (KL $\lambda$) Korrekturgröße, die korrekturfaktor- und betriebskenngrößenabhängig bestimmt wird.

Die Regeleinrichtung ermöglicht es somit, systematische Abweichungen der durch das Grundzumesssignal vorgegebenen Kraftstoffzumessungen, also der so genannten Vorsteuerung, von dem durch die Lambda-Regelung ermittelten Wert durch einen Adaptionseingriff mit einer entsprechenden Langzeitkorrektur auszugleichen. Systematische Abweichungen  können beispielsweise durch Alterungseinflüsse oder durch Fertigungseinflüsse bedingt sein. Im Mittel entspricht die durch die korrigierte Vorsteuerung definierte Menge an Kraftstoff der tatsächlich benötigten Menge. Kurzfristige Abweichungen können mit dem Lambda-Regler ausgeglichen werden, dem jetzt wieder der gesamte Regelbereich zur Verfügung steht. Das zugrunde liegende Verfahren ist auch unter der Bezeichnung Gemischadaption bekannt.

Aus der DE 4117 440 C2 ist ein Verfahren zum adaptiven Einstellen eines Kraftstoff/Luftgemisches zum Berücksichtigen von Kraftstoffeigenschaften im Betrieb einer Brennkraftmaschine bekannt, die einen Lambdaregler aufweist, der einen Regelfaktor RF ausgibt, und die einen Adaptionsintegrator aufweist, der einen Adaptionsfaktor AF mit variabler Adaptionsgeschwindigkeit ausgibt, der neben dem Regelfaktor FR die Einstellung des Kraftstoff/Luftgemischs beeinflusst. Dabei ist vorgesehen, dass überprüft wird, ob die Lambda-Regelungsabweichungsamplitude einen ersten Schwellenwert übersteigt, und, wenn dies der Fall ist, die Adaptionsgeschwindigkeit so lange auf einen erhöhten Wert gesetzt wird, bis eine vorgegebene Bedingungen erfüllt ist, wonach auf eine niedrige Adaptionsgeschwindigkeit zurückgeschaltet wird.

Das Verfahren ermöglicht es, Brennkraftmaschinen, welche mit unterschiedlichen Kraftstoffen betrieben werden können, störungsfrei zu betreiben. So muss beispielsweise die Einspritzzeit bei einem Wechsel von einem Kraftstoff Benzin auf ein Kraftstoffgemisch aus 85% Ethanol und 15% Benzin um mehr als 40% verlängert werden, um die gleichen Lambdawerte im Abgas zu erhalten. Dies ist begründet in dem unterschiedlichen Luftbedarf für eine stöchiometrische Verbrennung, die für Benzin bei einem Verhältnis von 14, 7 : 1 und bei einem heute üblichen Gemisch aus 85% Ethanol und 15% Benzin (Bezeichnung E85) bei 9, 0 : 1 liegt. Nach dem in der Schrift DE 4117 440 C2 beschriebenen Verfahren wird dazu ein entsprechender Adaptionseingriff vorgenommen. Da bei einem Kraftstoffwechsel eine im Vergleich zum Ausgleich von Alterungseinflüssen oder Fertigungseinflüssen sehr starke Korrektur der Einspritzzeiten und somit des Adaptionseingriffes vorgenommen werden muss, wird bei dem vorgeschlagenen Verfahren die Adaptionsgeschwindigkeit bei einem erkannten Kraftstoffwechsel deutlich erhöht.

Nachteilig bei den beschriebenen Verfahren ist, dass multiplikative Fehler, also Fehler, die sich im gesamten Last-Drehzahlbereich gleich auswirken, im stationären Betrieb einer warmen Brennkraftmaschine zunächst nicht von Gemischabweichungen aufgrund eines  geänderten Kraftstoff-Mischungsverhältnisses und damit geändertem Stöchiometriefaktor der Kraftstoffmischung zu unterscheiden sind. Es ist daher möglich, dass die Kraftstoffadaption Gemischfehler als eine Änderung des Mischungsverhältnisses interpretiert und entsprechend adaptiert. Insbesondere ein temporärer, aber systematisch während der Kraftstoffadaption vorliegender Gemischfehler führt zu einer Berücksichtigung bei der Kraftstoffadaption.

Umgekehrt kann eine nicht adaptierte Änderung des Kraftstoff-Mischungsverhältnisses, beispielsweise wenn eine Betankung nicht erkannt wurde, als Gemischfehler bei der Gemischadaption mit berücksichtigt sein.

Auf die Lambda-Einstellung der warmen Brennkraftmaschine im Stationärbetrieb hat diese Fehlinterpretation zunächst keine negativen Auswirkungen, da die stöchiometrische Korrektur insgesamt korrekt ist. Die genaue Kenntnis des Kraftstoff-Mischungsverhältnisses ist jedoch an anderer Stelle notwendig, um Rückschlüsse auf weitere Kraftstoffeigenschaften ziehen zu können. So wird das genaue Kraftstoff-Mischungsverhältnis zum Beispiel zur Zündwinkelberechnung zur Optimierung des Wirkungsgrades der Brennkraftmaschine benötigt.

Es ist Aufgabe der Erfindung, ein Verfahren bereitzustellen, welches die Bestimmung des Kraftstoff-Mischungsverhältnisses bei Brennkraftmaschinen, welche mit unterschiedlichen Kraftstoffen oder Kraftstoffmischungen betrieben werden können, ermöglicht.

Offenbarung der Erfindung

Vorteile der Erfindung

Die Aufgabe wird dadurch gelöst, dass aufgrund der Änderung der Kraftstoffadaption nach einem Tankvorgang hin zu einem Kraftstoff-Luft-Gemisch mit einem höheren oder mit einem niedrigeren Kraftstoffanteil auf den zugeführten Kraftstoff oder auf das zugeführte Kraftstoffgemisch geschlossen wird und dass aus der vor dem Tankvorgang in dem Tank befindlichen Kraftstoffmenge, dem vor dem Tankvorgang in dem Tank herrschenden Kraftstoff-Mischungsverhältnis, der dem Tank zugeführten Kraftstoffmenge und der Kenntnis des dem Tank zugeführten Kraftstoffs oder Kraftstoffgemischs das Kraftstoff-Mischungsverhältnis in dem Tank nach dem Tankvorgang berechnet wird.

Wird die Brennkraftmaschine beispielsweise mit Benzin oder einer Kraftstoffmischung aus Benzin und Ethanol mit maximal 85 Volumenprozent Ethanol (E85) betrieben, so kann sich das stöchiometrische Verhältnis des der Brennkraftmaschine zugeführten Luft/Kraftstoffgemischs von 14, 7 : 1 für reines Benzin bis zu 9, 0 : 1 für E85 ändern. Wird zu einer bestehenden Kraftstoffmischung aus Benzin und Ethanol in einem Kraftstofftank der Brennkraftmaschine beispielsweise reines Benzin zugetankt, so wird die Kraftstoffadaption eine Verringerung der der Brennkraftmaschine zugeführten Kraftstoffmenge bewirken. Ebenso wird bei Zugabe einer Kraftstoffmischung, die einen höheren EthanolGehalt aufweist als die im Tank befindliche Kraftstoffmischung, die Kraftstoffadaption zu einer höheren der Brennkraftmaschine zudosierten Kraftstoffmenge führen. Auf Basis des Verlaufes der Kraftstoffadaption kann somit auf die zugetankte Kraftstoffmischung geschlossen werden. Dabei kann die relative Änderung der zudosierten Kraftstoffmenge oder einer darauf bezogenen Kenngröße zu einem Wert vor der Betankung betrachtet werden oder es kann die relative Änderung der zudosierten Kraftstoffmenge oder eine darauf bezogenen Kenngröße bezogen auf einen bekannten, für eine vorgegebenen Kraftstoffzusammensetzung zutreffenden Wert, beispielsweise für reines Benzin, betrachtet werden. Mit der so gewonnenen Kenntnis der zugetankten Kraftstoffart, der bekannten Menge des zugetankten Kraftstoffes sowie der Kraftstoffzusammensetzung und Kraftstoffmenge im Kraftstofftank vor der Betankung lässt sich das Mischungsverhältnis im Kraftstofftank nach der Betankung berechnen. Dabei hängt die Genauigkeit der Berechnung des Mischungsverhältnisses unter anderem davon ab, wie genau die Kraftstoffzusammensetzung des zugetankten Kraftstoffes eingegrenzt werden kann.

Eine genaue Bestimmung des sich einstellenden Mischungsverhältnisses im Tank der Brennkraftmaschine lässt sich dadurch erreichen, dass von zwei möglichen Mischungsverhältnissen des zugetankten Kraftstoffs aus zwei Kraftstoffen ausgegangen wird, dass eine Zuordnung des zugetankten Kraftstoffes zu einem der möglichen Mischungsverhältnisse anhand der Änderung der Kraftstoffadaption nach einem Tankvorgang hin zu einem Kraftstoff-Luft-Gemisch mit einem höheren oder mit einem niedrigeren Kraftstoffanteil durchgeführt wird und dass die Berechnung des Kraftstoff-Mischungsverhältnisses in dem Tank für diesen bestimmten Kraftstoff durchgeführt wird.

In vielen Ländern werden nur Kraftstoffe in zwei Mischungsverhältnissen angeboten. So kann beispielsweise bei einem Tankvorgang davon ausgegangen werden, dass entweder reines Benzin oder eine Ethanol-Benzin-Mischung in einem vorgegebenen Mischungsverhältnis getankt wurde. Über die Änderungsrichtung der Kraftstoffadaption lässt sich eindeutig bestimmen, welcher der beiden möglichen Kraftstoffe getankt wurde. Bei Kenntnis der zugetankten Kraftstoffmenge, der vor der Betankung im Kraftstofftank vorrätigen Kraftstoffmenge und deren Mischungsverhältnis lässt sich so das nach dem Tanken resultierende Mischungsverhältnis sehr genau berechnen.

Ist das Kraftstoff-Mischungsverhältnis in dem Kraftstofftank berechnet, kann es gemäß einer bevorzugten Maßnahme der Erfindung vorgesehen sein, dass die auf Basis der Lambda-Regelung durchgeführte Kraftstoffadaption mit Hilfe des berechneten Kraftstoff-Mischungsverhältnisses korrigiert wird.

Es ist vorgesehen, dass bei Korrektur der Kraftstoffadaption eine gegenläufige Korrektur der Gemischadaption dahingehend durchgeführt wird, dass das vor der Korrektur der Kraftstoffadaption eingestellte Luft/Kraftstoffverhältnis gleich bleibt. Dieses Luft/Kraftstoffverhältnis ist vor der Korrektur der Krafftstoffadaption durch die Gemischadaption und die Kraftstoffadaption korrekt eingestellt. Lediglich der jeweilige Beitrag der Gemischadaption und der Kraftstoffadaption zur Gesamtadaption ist unter Umständen fehlerhaft. Das beschriebene Vorgehen sichert somit, dass das korrekte Luft/Kraftstoffverhältnis erhalten bleibt.

Gemäß einer weiteren Ausgestaltungsvariante der Erfindung kann es vorgesehen sein, dass für den zugetankten Kraftstoff von zumindest in vorgegebenen Grenzen beliebigen Mischungsverhältnissen aus zwei Kraftstoffen ausgegangen wird, dass eine maximal mögliche Änderung des Kraftstoff-Mischungsverhältnisses in dem Tank durch den zugetankten Kraftstoff bestimmt wird und dass eine Plausibilitätsüberprüfung der auf Basis der Lambda-Regelung durchgeführte Kraftstoffadaption auf Basis der möglichen Kraftstoff-Mischungsverhältnisse im Tank durchgeführt wird. Liegt das durch die Kraftstoffadaption ermittelte Kraftstoff-Mischungsverhältnis außerhalb des berechneten Bandes an möglichen Kraftstoff-Mischungsverhältnissen, kann auf einen Fehler bei der durchgeführten Kraftstoffadaption geschlossen werden. Dies kann zum Beispiel eine zu späte Umschaltung auf Kraftstoffadaption oder das Auftreten eines Fehlers im System während der Kraftstoffadaption sein.

Als Alternative zu den beschriebenen Verfahren, das Kraftstoff-Mischungsverhältnis im Tank einer Brennkraftmaschine zu bestimmen, werden heute bereits Kraftstoffartensensoren eingesetzt. Die korrekte Funktion eines solchen Kraftstoffartensensors kann dadurch kontrolliert werden, dass das berechnete Kraftstoff-Mischungsverhältnis mit einem von einem Kraftstoffartensensor bestimmten Kraftstoff-Mischungsverhältnis verglichen wird und dass auf eine Fehlfunktion geschlossen wird, wenn die Differenz zwischen den bestimmten Kraftstoff-Mischungsverhältnissen einen vorgegebenen Schwellwert überschreitet und/oder dass das durch die Kraftstoffadaption auf Basis der Lambda-Regelung bestimmte Kraftstoff-Mischungsverhältnis mit dem von dem Kraftstoffartensensor bestimmten Kraftstoff-Mischungsverhältnis verglichen wird und dass auf eine Fehlfunktion geschlossen wird, wenn die Differenz zwischen den bestimmten Kraftstoff-Mischungsverhältnissen einen vorgegebenen Schwellwert überschreitet.

Das beschriebene Verfahren lässt sich bevorzugt bei einer mit Benzin oder einer Mischung aus Benzin und Ethanol, vorzugsweise mit einer Mischung aus Benzin und maximal 85% Ethanol, betreibbaren Brennkraftmaschine einsetzen.

Kurze Beschreibung der Zeichnungen

Die Erfindung wird im Folgenden anhand des in der Figur dargestellten Ausführungsbeispiels näher erläutert. Es zeigen:

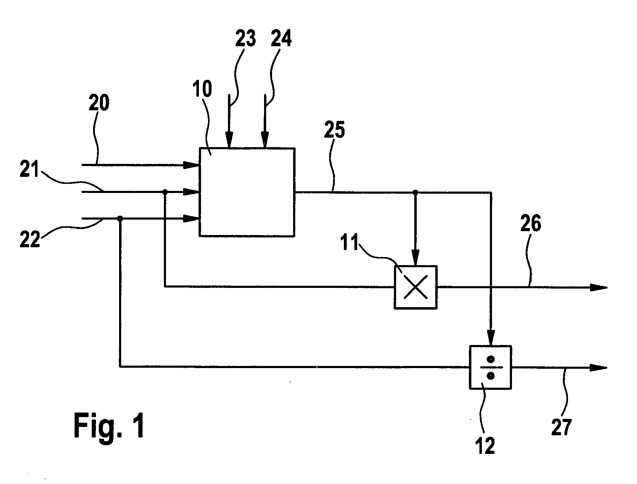

Figur 1      in einem Blockdiagramm die Berechnung von korrigierten Kraftstoff- und Gemischadaptionswerten.

Ausführungsformen der Erfindung

Figur 1 zeigt in einem Blockdiagramm die Berechnung eines Kraftstoffadaptionswertes nach Korrektur f_k_korr 26 und eines Gemischadaptionswertes nach Korrektur f_g_korr 27 als eine mögliche Anwendung der erfindungsgemäßen Bestimmung des Kraftstoff-Mischungsverhältnisses in einem Kraftstofftank einer nicht dargestellten Brennkraftmaschine nach einem Tankvorgang.

Einer Berechnungseinheit 10 sind die Signale relative Betankung rel_b 20, Kraftstoffadaptionswert vor Korrektur f_k 21 und Gemischadaptionswert vor Korrektur f_g 22 zugeführt. Weiterhin werden der Berechnungseinheit 10 die Informationen über den Stöchiometriefaktor Kraftstoff 1 S_1 23 und den Stöchiometriefaktor Kraftstoff 2 S_2 24 übermittelt.

Der Kraftstoffadaptionswert vor Korrektur f_k 21 wird zusätzlich an eine Multiplikationsstelle 11 weiter geleitet, während der Gemischadaptionswert vor Korrektur f_g 22 einer Divisionsstelle 12 zugeführt wird. Multiplikationsstelle 11 und Divisionsstelle 12 erhalten weiterhin als Eingangssignal einen Korrekturfaktor 25 als Ausgangssignal der Berechungseinheit 10. In der Multiplikationsstelle 11 wird ein Kraftstoffadaptionswert nach Korrektur f_k_korr 26 gebildet, in der Divisionsstelle 12 ein Gemischadaptionswert nach Korrektur f_g_korr 27.

In dem dargestellten Ausführungsbeispiel wird davon ausgegangen, dass an Tankstellen nur zwei bestimmte Kraftstoffmischungen angeboten werden. Dabei handelt es sich für den Kraftstoff 1 um reines Benzin und für den Kraftstoff 2 um eine Mischung aus Ethanol und Benzin in einem Mischungsverhältnis von etwa 85:15 Volumenprozent. Diese Mischung wird im Folgenden mit E85 bezeichnet.

Benzin und E85 unterscheiden sich deutlich in ihrem Luftbedarf für eine stöchiometrische Verbrennung. Dabei liegt das stöchiometrische Verhältnis für Benzin bei 14, 7 : 1, während es für E85 bei 9, 0:1 liegt. Daher wird bei E85 auch im Stationärbetrieb einer Brennkraftmaschine eine erhöhte zudosierte Menge an Kraftstoff benötigt. Die unterschiedlichen Stöchiometriefaktoren sind der Berechnungseinheit 10 in Form des Stöchiometriefaktors Kraftstoff S_1 23 für reines Benzin und des Stöchiometriefaktors Kraftstoff S_2 24 für E85 zugeführt.

Die Anpassung der der Brennkraftmaschine zudosierten Kraftstoffmenge erfolgt nach bekanntem Verfahren über eine so genannte Kraftstoffadaption. Diese ermittelt den Kraftstoffadaptionswert vor Korrektur f_k 21, mit welchem zum einen die der Brennkraftmaschine nach einem Kraftstoffwechsel zudosierte Kraftstoffmenge korrigiert wird und welcher in dem dargestellten Ausführungsbeispiel der Berechnungseinheit 10 zugeführt ist.

Ebenfalls nach bekanntem Verfahren werden Gemischfehler durch eine so genannte Gemischadaption ausgeglichen. Diese bildet den Gemischadaptionswert vor Korrektur f_g 22. Mit diesem wird die der Brennkraftmaschine zudosierte Kraftstoffmenge korrigiert, sie wird weiterhin der Berechnungseinheit 10 zugeführt.

Die der Berechnungseinheit 10 zugeführte relative Betankung rel_b 20 beschreibt, wie viel Kraftstoff V_b während eines Tankvorganges zugetankt wurde, bezogen auf die vor dem Tanken im Kraftstofftank befindliche Kraftstoffmenge. Die vor dem Tanken im Kraftstofftank befindliche Kraftstoffmenge setzt sich aus einem Volumen Kraftstoff 1 V_1 und einem Volumen Kraftstoff 2 V_2 zusammen. Die zugetankte Kraftstoffmenge V_b wird zum Beispiel über eine Betankungserkennung ermittelt.

Wird zu einer beliebigen Kraftstoffmischung im Tank der Brennkraftmaschine Kraftstoff 1, also reines Benzin, hinzugetankt, so wird sich, solange der Tankinhalt vor der Betankung nicht ebenfalls reines Benzin war, der Kraftstoffadaptionswert vor Korrektur f_k 21 dahingehend verändern, dass sich die der Brennkraftmaschine zudosierte Kraftstoffmenge reduziert, dass sich also ein magereres Luft-/Kraftstoffgemisch einstellt. Sinngemäß wird sich der Kraftstoffadaptionswert vor Korrektur f_k 21 zu fetteren Luft-/Kraftstoffgemischen hin verändern, wenn Kraftstoff 2, also E85, zugetankt wurde. Anhand der Änderung des Kraftstoffadaptionswertes vor Korrektur f_k 21 kann die Berechnungseinheit 10 also eindeutig entscheiden, welche der beiden Kraftstoffarten zugetankt wurde.

Ist das Mischungsverhältnis im Tank vor Betankung mv_vor bekannt und in der Berechnungseinheit 10 hinterlegt, so kann die Berechnungseinheit das Mischungsverhältnis im Tank nach Betankung mv_nach berechnen:

$$mv\_nach = (V\_2 + mv\_b*V\_b) / (V\_1 + V\_2 + V\_b)$$

$$mv\_nach = (mv\_vor + mv\_b*rel\_b) / (1 + rel\_b)$$

Dabei sind die beiden möglichen Mischungsverhältnisse des getankten Kraftstoffes mv_b in der Berechnungseinheit 10 hinterlegt und werden auf Basis der Änderung der Kraftstoffadaption ausgewählt.

Aus dem Mischungsverhältnis im Tank nach Betankung mv_nach, den bekannten Stöchiometriefaktoren Kraftstoff 1 S_1 23 und Kraftstoff 2 S_2 24 sowie ebenfalls in der Berechnungseinheit 10 hinterlegten Kraftstoffdichten rho_1 für Kraftstoff 1 und rho_2 für Kraftstoff 2 kann die Berechnungseinheit 10 einen Kraftstoffadaptionswert f_k_nach als multiplikative Volumenkorrektur berechnen.

$$f\_k\_nach = (S\_1*rho\_2) / (S\_1*rho\_2*(1-mv\_nach)+S\_2*rho\_1*mv\_nach)$$

$$f\_k\_nach = 1 / (mv\_nach * (S\_2/S\_1 * rho\_1 / rho\_2-1)+1)$$

Unter Berücksichtigung weiterer Bedingungen, beispielsweise der Genauigkeit der relativen Betankung, kann der sich aus der Kraftstoffadaption einstellende Kraftstoffadaptionswert f_k nach verschiedenen Strategien an f_k_nach herangeführt werden.

In dem in Figur 1 dargestellten Ausführungsbeispiel wird dazu von der Berechungseinheit 10 ein Korrekturfaktor 25 bereit gestellt, welcher an der Multiplikationsstelle 11 multiplikativ mit dem Kraftstoffadaptionswert vor Korrektur f_k 21 verknüpft wird und so den Kraftstoffadaptionswert nach Korrektur f_k_korr entsprechend dem Kraftstoffadaptionswert f_k_nach bildet.

Um das vor der Korrektur der Kraftstoffadaption gebildete, korrekte Luft-/Kraftstoffverhältnis beizubehalten, wird die Gemischadaption gegenläufig zur Kraftstoffadaption korrigiert. Dazu wir der Gemischadaptionswert vor Korrektur f_g 22 mit Hilfe des Korrekturfaktors 25 in der Divisionsstelle 12 zu dem Gemischadaptionswert nach Korrektur f_g_korr umgerechnet.

## Patentansprüche

**1.** Verfahren zum Betrieb einer Brennkraftmaschine, welche mit Kraftstoffen und Kraftstoffgemischen aus diesen Kraftstoffen betrieben werden kann, die sich in ihrem Luftbedarf für eine stöchiometrische Verbrennung unterscheiden, wobei eine der Brennkraftmaschine zuzuführende Kraftstoffmenge über eine Gemischadaption, bei welcher eine Korrektur des Luft-Kraftstoff-Gemischs in einem Lambda-Regler erfolgt, sodass eine gegebenenfalls verbleibende Lambda-Abweichung vom Sollwert ohne Regeleingriff beseitigt wird, damit die Lambda-Regelung im Mittelwert neutral arbeiten kann und eine Kraftstoffadaption, bei welcher die Kraftstoffzusammensetzung bestimmt wird, korrigiert wird, wobei die Gemischadaption und die Kraftstoffadaption auf Basis der Lambda-Regelung erfolgt, wobei eine vor einem Tankvorgang in einem den Kraftstoffvorrat der Brennkraftmaschine beinhaltenden Tank befindliche Kraftstoffmenge und eine dem Tank zugeführte Kraftstoffmenge bestimmt wird, wobei aufgrund der Änderung der Kraftstoffadaption nach einem Tankvorgang hin zu einem Kraftstoff-Luft-Gemisch mit einem höheren oder mit einem niedrigeren Kraftstoffanteil auf den zugeführten Kraftstoff oder auf das zugeführte Kraftstoffgemisch geschlossen wird und wobei aus der vor dem Tankvorgang in dem Tank befindlichen Kraftstoffmenge, dem vor dem Tankvorgang in dem Tank herrschenden Kraftstoff-Mischungsverhältnis, der dem Tank zugeführten Kraftstoffmenge und der Kenntnis des dem Tank zugeführten Kraftstoffs oder Kraftstoffgemischs das Kraftstoff-Mischungsverhältnis in dem Tank nach dem Tankvorgang berechnet wird, **dadurch gekennzeichnet, dass** die auf Basis der Lambda-Regelung durchgeführte Kraftstoffadaption mit Hilfe des berechneten Kraftstoff-Mischungsverhältnisses korrigiert wird und dass bei Korrektur der Kraftstoffadaption eine gegenläufige Korrektur der Gemischadaption dahingehend durchgeführt wird, dass das vor der Korrektur der Kraftstoffadaption eingestellte Luft/Kraftstoffverhältnis gleich bleibt.

2. Verfahren nach Anspruch 1, **dadurch gekennzeichnet, dass** von zwei möglichen Mischungsverhältnissen des zugetankten Kraftstoffs aus zwei Kraftstoffen ausgegangen wird, dass eine Zuordnung des zugetankten Kraftstoffes zu einem der möglichen Mischungsverhältnisse anhand der Änderung der Kraftstoffadaption nach einem Tankvorgang hin zu einem Kraftstoff-Luft-Gemisch mit einem höheren oder mit einem niedrigeren Kraftstoffanteil durchgeführt wird und dass die Berechnung des Kraftstoff-Mischungsverhältnisses in dem Tank für diesen bestimmten Kraftstoff durchgeführt wird.

3. Verfahren nach Anspruch 1, **dadurch gekennzeichnet, dass** für den zugetankten Kraftstoff von zumindest in vorgegebenen Grenzen beliebigen Mischungsverhältnissen aus zwei Kraftstoffen ausgegangen wird, dass eine maximal mögliche Änderung des Kraftstoff-Mischungsverhältnisses in dem Tank durch den zugetankten Kraftstoff bestimmt wird und dass eine Plausibilitätsüberprüfung der auf Basis der Lambda-Regelung durchgeführte Kraftstoffadaption auf Basis der möglichen Kraftstoff-Mischungsverhältnisse im Tank durchgeführt wird.

4. Verfahren nach einem der Ansprüche 1 bis 3, **dadurch gekennzeichnet, dass** das berechnete Kraftstoff-Mischungsverhältnis mit einem von einem Kraftstoffartensensor bestimmten Kraftstoff-Mischungsverhältnis verglichen wird und dass auf eine Fehlfunktion geschlossen wird, wenn die Differenz zwischen den bestimmten Kraftstoff-Mischungsverhältnissen einen vorgegebenen Schwellwert überschreitet und/oder dass ein durch die Kraftstoffadaption auf Basis der Lambda-Regelung bestimmtes Kraftstoff-Mischungsverhältnis mit dem von dem Kraftstoffartensensor bestimmten Kraftstoff-Mischungsverhältnis verglichen wird und dass auf eine Fehlfunktion geschlossen wird, wenn die Differenz zwischen den bestimmten Kraftstoff-Mischungsverhältnissen einen vorgegebenen Schwellwert überschreitet.

5. Anwendung des Verfahrens nach einem der vorhergehenden Ansprüche bei einer mit Benzin oder einer Mischung aus Benzin und Ethanol, vorzugsweise mit einer Mischung aus Benzin und maximal 85% Ethanol, betreibbaren Brennkraftmaschine.

**Claims**

1. Method for operating an internal combustion engine which can be operated with fuels and fuel mixtures composed of these fuels which differ in their requirement of air for stoichiometric combustion, wherein a quantity of fuel which is to be fed to the internal combustion engine is corrected by means of a mixture adaptation, in which the air/fuel mixture is corrected in a lambda controller, with the result that a possibly remaining lambda deviation from the setpoint value is eliminated without a control intervention, so that the lambda control can operate neutrally at the mean value, and a fuel adaptation, in which the fuel composition is determined, wherein the mixture adaptation and the fuel adaptation are carried out on the basis of the lambda control, wherein a quantity of fuel which, before a refuelling process, is located in a fuel tank which contains the fuel supply of the internal combustion engine and a quantity of fuel which is fed to the fuel tank is determined, wherein on the basis of the change in the fuel adaptation after a refuelling process extending as far as a fuel/air mixture with a relatively high proportion of fuel or with a relatively low proportion of fuel the fed-in fuel or the fed-in fuel mixture is inferred, and wherein the fuel mixture ratio in the fuel tank after the refuelling process is calculated from the quantity of fuel located in the fuel tank before the refuelling process, the fuel mixture ratio present in the fuel tank before the refuelling process, the quantity of fuel fed into the fuel tank and the knowledge of the fuel or fuel mixture fed into the fuel tank, **characterized in that** the fuel adaptation which is carried out on the basis of the lambda control is corrected using the calculated fuel mixture ratio, and **in that** when the fuel adaptation is corrected, the mixture adaptation is corrected in the opposite direction to the effect that the fuel/air ratio which is set before the correction of the fuel adaptation remains the same.

2. Method according to Claim 1, **characterized in that** it is assumed that there are two possible mixture ratios of the refuelled fuel composed of two fuels, **in that** the refuelled fuel is assigned to one of the possible mixture ratios on the basis of the change in the fuel adaptation after a refuelling process extending as far as a fuel/air mixture with a relatively high proportion of fuel or with a relatively low proportion of fuel, and **in that** the fuel mixture ratio in the fuel tank is calculated for this specific fuel.

**3.** Method according to Claim 1, **characterized in that** any mixture ratios of two fuels, at least within predefined limits, are assumed for the refuelled fuel, **in that** a maximum possible change in the fuel mixture ratio in the fuel tank is determined by the refuelled fuel, and **in that** plausibility checking of the fuel adaptation which is carried out on the basis of the lambda control is carried out on the basis of the possible fuel mixture ratios in the fuel tank.

**4.** Method according to one of Claims 1 to 3, **characterized in that** the calculated fuel mixture ratio is compared with a fuel mixture ratio which is determined by a fuel type sensor, and **in that** a malfunction is inferred if the difference between the specific fuel mixture ratios exceeds a predefined threshold value, and/or **in that** a fuel mixture ratio which is determined by the fuel adaptation on the basis of the lambda control is compared with the fuel mixture ratio which is determined by the fuel type sensor, and **in that** a malfunction is inferred if the difference between the specific fuel mixture ratios exceeds a predefined threshold value.

**5.** Use of the method according to one of the preceding claims in an internal combustion engine which can be operated with petrol or a mixture of petrol and ethanol, preferably with a mixture of petrol and at maximum 85% ethanol.

**Revendications**

**1.** Procédé pour faire fonctionner un moteur à combustion interne, lequel peut fonctionner avec des carburants et des mélanges de carburant composés de ces carburants, lesquels se différencient par leur besoin en air pour une combustion stoechiométrique, une quantité de carburant à acheminer au moteur à combustion interne étant corrigée par une adaptation du mélange, lors de laquelle a lieu une correction du mélange air/carburant dans un régulateur lambda, de sorte qu'un écart lambda éventuellement restant par rapport à la valeur de consigne soit éliminé sans intervention du régulateur, de sorte que la régulation lambda puisse fonctionner de manière neutre dans la valeur moyenne, et une adaptation du carburant, lors de laquelle la composition du carburant est déterminée, l'adaptation du mélange et l'adaptation du carburant s'effectuant sur la base de la régulation lambda, une quantité de carburant qui se trouve dans un réservoir contenant la réserve de carburant du moteur à combustion interne avant une opération d'avitaillement ainsi qu'une quantité de carburant acheminée au réservoir étant déterminées, le carburant acheminé ou le mélange de carburant acheminé étant déduits en se basant sur la modification de l'adaptation du carburant après une opération d'avitaillement en vue d'un mélange carburant/air ayant une part de carburant plus élevée ou plus faible et le rapport de mélange de carburant dans le réservoir après l'opération d'avitaillement étant calculé à partir de la quantité de carburant qui se trouvait dans le réservoir avant l'opération d'avitaillement, du rapport de mélange de carburant qui régnait dans le réservoir avant l'opération d'avitaillement, de la quantité de carburant acheminée au réservoir et de la connaissance du carburant ou du mélange de carburant acheminé au réservoir, **caractérisé en ce que** l'adaptation du carburant effectuée en se basant sur la régulation lambda est corrigée à l'aide du rapport de mélange de carburant calculé et **en ce qu'**en cas de correction de l'adaptation du carburant, une correction en sens inverse de l'adaptation du mélange est effectuée afin que le rapport air/carburant réglé avant la correction de l'adaptation du carburant reste identique.

**2.** Procédé selon la revendication 1, **caractérisé en ce qu'**il est supposé deux rapports de mélange possibles du carburant avitaillé composé de deux carburants, **en ce qu'**une affectation du carburant avitaillé à un des rapports de mélange possibles est effectuée au moyen de la modification de l'adaptation du carburant après une opération d'avitaillement en vue d'un mélange carburant/air ayant une part de carburant plus élevée ou plus faible et **en ce que** le calcul du rapport de mélange de carburant dans le réservoir est effectué pour ce carburant défini.

**3.** Procédé selon la revendication 1, **caractérisé en ce qu'**il est supposé, pour le carburant avitaillé, des rapports de mélange quelconques, au moins dans des limites prédéfinies, de deux carburants, **en ce qu'**une modification maximale possible du rapport de mélange de carburant dans le réservoir par le carburant avitaillé est définie et **en ce qu'**un contrôle de plausibilité de l'adaptation du carburant effectuée sur la base de la régulation lambda est effectué sur la base des rapports de mélange de carburant possibles dans le réservoir.

**4.** Procédé selon l'une des revendications 1 à 3, **caractérisé en ce que** le rapport de mélange de carburant calculé est comparé avec un rapport de mélange de carburant défini par un capteur de type de carburant et **en ce qu'**un défaut de fonctionnement est déduit lorsque la différence entre les rapports de mélange de carburant définis dépasse une valeur de seuil prédéfinie et/ou **en ce qu'**un rapport de mélange de carburant défini par l'adaptation du carburant sur la base de la régulation lambda est comparé avec le rapport de mélange de carburant défini par le capteur de type de carburant et **en ce qu'**un défaut de fonctionnement est déduit lorsque la différence entre les rapports de mélange de carburant définis dépasse une valeur de seuil prédéfinie.

5. Application du procédé selon l'une des revendications précédentes avec un moteur à combustion interne pouvant fonctionner avec de l'essence ou un mélange d'essence et d'éthanol, de préférence avec un mélange d'essence et de maximum 85 % d'éthanol.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3036107 C3

- DE 4117440 C2